# EUROPEAN PATENT APPLICATION

(11) **EP 4 681 846 A1**
(43) Date of publication of application: **21.01.2026**
(21) Application number: 25187381.6
(22) Date of filing: 03.07.2025
(51) Int. Cl.: B22F 5/00, B22F 10/25, B22F 10/28, B33Y 10/00, B33Y 80/00

(54) **HYBRID POWERED BED FUSION/DIRECTED ENERGY DEPOSITION DISTORTION MITIGATION STRUCTURE**

(30) Priority: 03.07.2024 US 202418763914
(71) Applicant: RTX Corporation, Farmington, CT 06032 (US)
(72) Inventor: BINEK, Lawrence, East Hartford, 06118 (US); GUSTAFSON, Brendan, East Hartford, 06118 (US); OTT, Joseph, East Hartford, 06118 (US); SIROIS, Dean, East Hartford, 06118 (US)
(74) Representative: Dehns

(57) **Abstract**

A component (20) includes a component segment (22), a foundation (24a) built on the component segment (22), and a plurality of distortion mitigation structures (26) built on the component segment (22). The component segment (22), foundation (24a), and the plurality of distortion mitigation structures (26) are built with a first additive manufacturing, AM, technique. The component (20) further includes a boss (24) built on the foundation (24a) using a second AM technique. The plurality of distortion mitigation structures (26) are configured to radiate away from the foundation (24a) and to dissipate heat generated on the foundation (24a) when the boss (24) is built using the second AM technique.

## Description

The present invention relates generally to forming raised structures on surfaces of components and, more particularly, to an approach for forming such raised structures using additive manufacturing techniques.

Protruding or raised features formed on surfaces of components are often referred to as "bosses." Such features are typically cylindrical or conical projections added to a component for specific purposes, such as providing structural support, facilitating connections, enabling ease of assembly and disassembly in various mechanisms, etc. The bosses can be open (i.e., surrounding an orifice) or closed structures and can be solid or hollow structures as appropriate for a particular application.

For example, bosses can be used as structural reinforcements to enhance the strength and durability of a component. Addition of bosses to areas of a component that experience stress or load can reduce component failure in high wear conditions. Bosses are often used as attachment points for threaded fasteners such as bolts and screws, allowing for easy assembly and disassembly of structures. In some applications, bosses are used as connectors for pipes, tubes, or hoses. Bosses can also be used to house electrical components or connectors or can function as secure attachment points for cables, connectors, and other electrical elements. The inclusion of bosses in engineering designs can provide for enhanced strength by significantly improving the load-bearing capacity of components, precise assembly by providing clear attachment points, and modularity by promoting easy assembly, disassembly, and replacement of components.

### SUMMARY

According to an aspect of the present invention, there is provided a component including a component segment, a foundation built on the component segment, and a plurality of distortion mitigation structures built on the component segment. The component segment, foundation, and the plurality of distortion mitigation structures are built with a first additive manufacturing (AM) technique. The component further includes a boss built on the foundation using a second AM technique. The plurality of distortion mitigation structures are configured to radiate away from the foundation and to dissipate heat generated on the foundation when the boss is built using the second AM technique.

According to another aspect of the present invention, there is provided a method of making a component. A component segment including an integral foundation for a boss and a plurality of distortion mitigation features is built on a build platform of a first AM device using a first AM technique. The component segment is removed from the first AM device and moved to a second AM device. An energy/powder head of a second AM device is positioned over the integral foundation using the integral foundation as a location datum. The boss is built on top of the integral foundation using the energy/powder head of the second AM device and a second AM technique to build a completed component. The completed component is removed from the second AM device. The energy/powder head comprises a build head configured to deliver powder and direct energy to a build surface.

The following optional features may be applied to any of the above aspects.

The plurality of distortion mitigation structures may be built as a web on ligaments extending from the foundation.

Each of the ligaments of the plurality of distortion mitigation structures may include a chamfer.

Each of the ligaments of the plurality of distortion mitigation structures may include a blend radius configured to reduce stress on each of the ligaments.

Each of the ligaments of the plurality of distortion mitigation structures may be a tetrahedral prism.

The first AM technique may be a laser powder bed fusion technique.

The first AM device may be a laser powder bed fusion device.

The second AM technique may be a directed energy deposition technique.

The second AM device may be a directed energy deposition device.

The component may be a gas turbine engine component.

The gas turbine engine component may be a case or a housing.

The gas turbine engine component may be made from an aluminum alloy, a titanium alloy, a superalloy, or a specialty steel.

### BRIEF DESCRIPTION OF THE DRAWINGS

Fig. 1 is a schematic representation of a component that includes a boss.
Fig. 2A is a schematic representation of a component that includes a boss and distortion mitigation structures of the present invention.
Fig. 2B is an overhead schematic representation of a component that includes a boss and distortion mitigation structures of the present invention.
Fig. 2C is a more detailed schematic representation of the distortion mitigation structures of the present invention.
Fig. 3 is a flowchart of the process of forming a component with a boss and the distortion mitigation structures of the present invention.

### DETAILED DESCRIPTION

Bosses are commonly used on components, including aerospace components, for a variety of reasons, including to enhance component strength by significantly improving the load-bearing capacity of the component, allowing for precise assembly by providing clear attachment points, and other reasons. Conventional construction techniques for components with bosses include casting the component and boss together, welding the boss to a substrate component, and other conventional techniques.

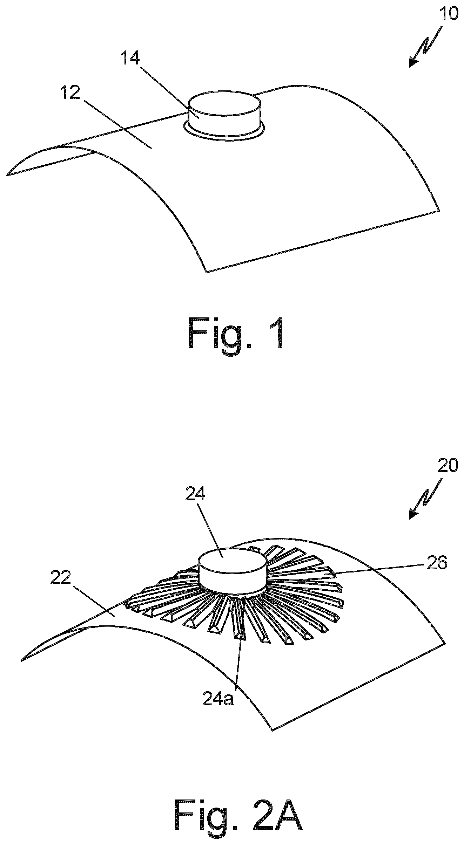

Additive manufacturing (AM) techniques can also be used to make components with bosses, but such techniques can be problematic, particularly for large components. For example, building the boss as an integral portion of a larger assembly using a first AM technique, such as a laser powder bed fusion (PBF-LB) or an electron beam powder bed fusion (PBF-EB) technique, can encounter challenges addressing the thermal stresses imparted during the AM build process. This challenge can be particular pronounced if the component has a relatively thin wall that provides a limited heat sink to mitigate thermal affects associated with the AM technique. For example, the component **10** shown in Fig. 1, which can be a gas turbine engine component such as a component segment **12** of a gas turbine engine case, a housing, or other component can have a relatively thin wall (e.g., 0.025 inches [0.635 mm] thick) with a boss **14** attached to it. The mass of the component segment **12** can be insufficient to act as a heat sink to address the thermal stresses of forming the boss **14** on the component **10** using AM techniques.

One option to building the part exclusively using a single AM technique is to make the component segment **12** using a first AM technique, such as PBF-LB or PBF-EB, and using a second AM technique, such as Directed Energy Deposition (DED), to form the boss **14** on the component segment **12.** The first and second AM techniques can also be other AM techniques that are deemed appropriate for a particular build. While using a combination of AM techniques allows the individual portions of the finished component **10** to be made with preferred techniques (i.e., PBF-LB for the relatively large component segment **12** and DED for the smaller, more prominent boss **14**) experience has shown that when using conventional PBF-LB design guidelines to build the component segment **12,** using DED techniques to build a boss **14** on a component segment **12** having a relatively thin wall can create a heat affected zone that results in a build failure with the boss **14** feature and neighboring component segment **12** becoming distorted. Increasing the build angle of the boss **14** to ameliorate distortion caused by the DED process thermal effects undesirably increases part mass and build time. Similarly, increasing the component segment **12** thickness to create a more robust heat sink to address the DED process thermal effects also undesirably increases part mass and build time.

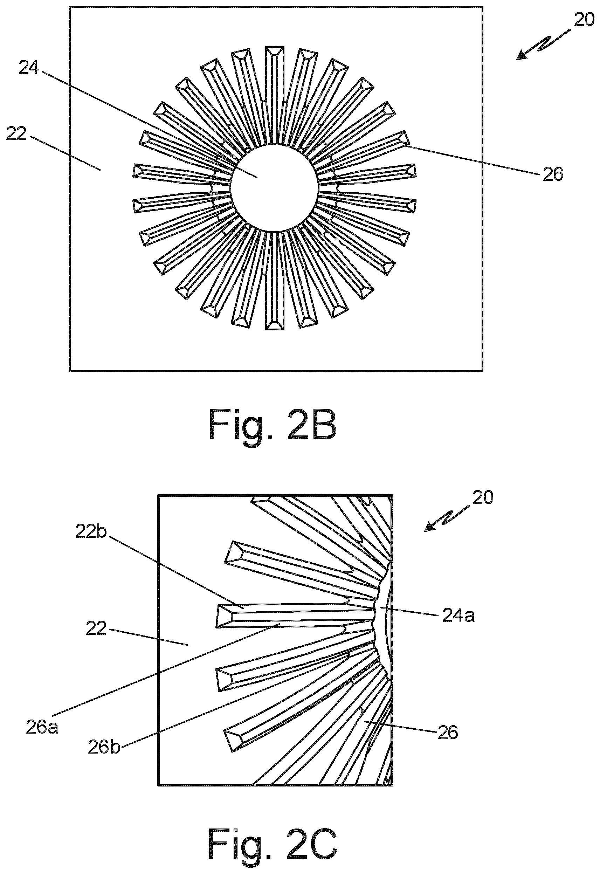

Figs. 2A and 2B show another component **20** design that includes a plurality of distortion mitigation structures **26** built on the component segment **22** and surrounding the boss **24.** The plurality of distortion mitigation structure **26** function as a heat exchanger to direct heat from the immediate vicinity of the boss **24** to outlying portions of the component segment **22** and as a heat sink to add a selected amount of mass to absorb heat from the second AM technique (e.g., a DED process) used to form the boss **24.** The structure of the component **20** includes a component segment **22** (substrate) built with a first AM technique (e.g., PBF-LB). The first AM technique (e.g., PBF-LB) build of the component segment **22** can include an integral foundation **24a** for the boss **24.** The distortion mitigation structures **26** can also be built as part of the first AM technique (e.g., PBF-LB) build of the component segment **22.** The distortion mitigation structures **26** radiate from the foundation **24a** and help move the thermal effects from the second AM (e.g., DED) process to a larger area on the component segment **22,** thereby dissipating heat associated with the second AM (e.g., DED) process. The foundation **24a,** which can be of limited height (e.g., 0.25 inches [6.35 mm]), can provide a datum for the second AM (e.g., DED) deposition of the boss **24,** thereby increasing the volume of the boss **24** applied with the second AM (e.g., DED) process. The dimensions of the foundation **24a** should be selected to be appropriate to a particular application and may, for example, be based on the volume of the boss **24** to be built on the foundation **24a.**

Fig. 2C shows additional details of the plurality of distortion mitigation structures **26.** Each of the plurality of distortion mitigation structures **26,** which are formed as webbing ligaments, should have a shape that is readily formed using the first AM (e.g., PBF-LB) techniques, such as the illustrated elongated trapezoidal prism. Any other appropriate shape, particularly a shape that is self-supporting, for example only, a tetrahedral or triangular prism shape, a bead of tapering width, etc. can also be selected. Each of the plurality of distortion mitigation structures **26** need not be identical. In some examples, it may be appropriate for webbing ligaments of the distortion mitigation structures **26** that are close to a horizontal axis near the boss **24** to have a different chamfer height **26a** to account for curvature of the component segment **22.** In some examples, the plurality of distortion mitigation structures **26** may include a blend radius **26b** between the individual ligaments to reduce stress on the ligaments associated with tight angles and abrupt geometry changes. Depending on the application for which the component **20** is intended, a designer can balance the volume of material used for the plurality of thermal mitigation structures **26** against the requirement to conduct heat away from the boss **24** during the second AM (e.g., DED) build process used to form the boss **24.** As illustrated in Fig. 2C, the plurality of distortion mitigation structures **26** will require very minimal post processing.

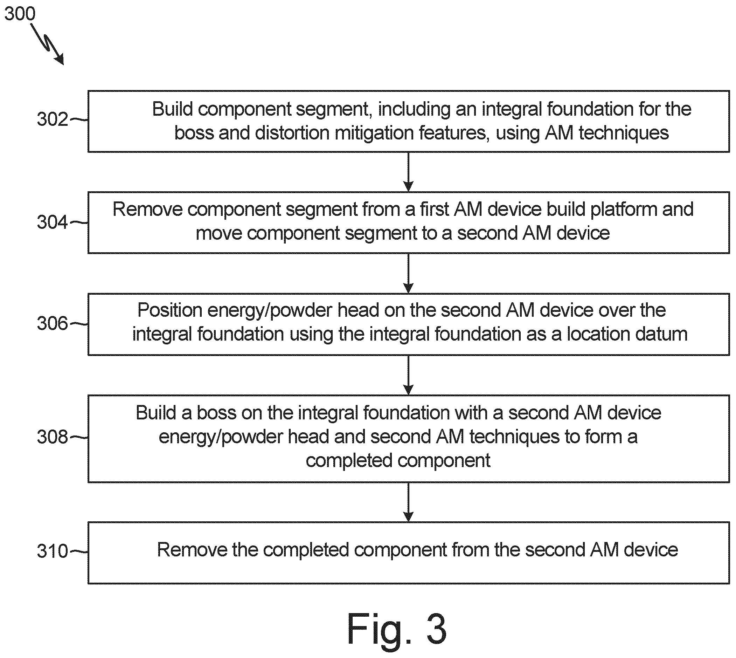

Fig. 3 is a flowchart of a method **300** for forming the component **20** with the plurality of distortion mitigation structures **26.** At step **302,** the component segment **22** is built using first AM (e.g., PBF-LB) techniques. The component segment **22** build includes an integral foundation **24a** for the boss **24** and the distortion mitigation structures **26** as discussed above. At step **304,** the component **20** is removed from a first AM (e.g., PBF-LB) device build platform and moved to a second AM (e.g., DED) device. The first AM device build platform and associated first AM device can be any such device deemed appropriate to form the component segment **22** with associated integral foundation **24a** and the distortion mitigation structures **26.** Similarly, the second AM device can be any such device deemed appropriate to build a boss **24** with a desired geometry on the integral foundation **24a.** At step **306,** a second AM (e.g., DED) device energy/powder head is positioned over the integral foundation **24a,** using the integral foundation **24a** as a location datum. At step **308,** the second AM device energy/powder head builds a boss **24** with the desired geometry on top of the integral foundation **24a** to complete the component **20** build. At step **310,** the completed component is removed from the second AM device. A person of ordinary skill will know how to select appropriate AM devices and perform each of the AM steps based upon the present invention and knowledge of AM processes.

A person of ordinary skill will recognize that the materials used to make the component **20** can be any of the materials typically used for the applications for which the component **20** is intended. For example, if the component **20** can be used in a gas turbine application, the material used to make the component **20** can be a titanium alloy, an aluminum alloy, a superalloy, a specialty steel or other appropriate material.

By using multiple AM processes to build the component **20,** the definition (e.g., height, width, diameter, thickness, etc.) of the boss **24** is largely decoupled from the somewhat constrained PBF-LB design rules. For example, a large diameter or tall boss **24** can be built with DED techniques on the component segment **22,** which is made with PBF-LB techniques, without significant additional support structure. This approach can reduce cost for an additive solution and minimize post processing times. Because each of the selected first and second AM techniques leaves a residual indication of the selected technique used to build each feature (e.g., in the layers and or microstructure of the parts made with the technique), it is possible to determine which technique was used to build each feature.

### Discussion of Possible Embodiments

The following are non-exclusive descriptions of possible embodiments of the present invention.

A component comprises a component segment, a foundation built on the component segment, and a plurality of distortion mitigation structures built on the component segment, wherein the component segment, foundation, and the plurality of distortion mitigation structures are built with a first additive manufacturing (AM) technique and a boss built on the foundation using a second AM technique. The plurality of distortion mitigation structures are configured to radiate away from the foundation and to dissipate heat generated on the foundation when the boss is built using the second AM technique.

The component of the preceding paragraph can optionally include, additionally and/or alternatively, any one or more of the following features, configurations and/or additional elements:
The component, wherein the plurality of distortion mitigation structures are built as a web on ligaments extending from the foundation.

The component, wherein each of the ligaments of the plurality of distortion mitigation structures includes a chamfer.

The component, wherein each of the ligaments of the plurality of distortion mitigation structures includes a blend radius configured to reduce stress on each of the ligaments.

The component, wherein each of the ligaments of the plurality of distortion mitigation structures is a tetrahedral prism.

The component, wherein the first AM technique is a laser powder bed fusion technique.

The component, wherein the second AM technique is a directed energy deposition technique.

The component, wherein the component is a gas turbine engine component.

The component, wherein the gas turbine engine component is a case or a housing.

The component, wherein the gas turbine engine component is made from an aluminum alloy, a titanium alloy, a superalloy, or a specialty steel.

A method of making a component comprises building, using a first additive manufacturing (AM) technique, a component segment, including an integral foundation for a boss and a plurality of distortion mitigation features on a build platform of a first AM device. The component segment is removed from the first AM device and moved to a second AM device. An energy/powder head of a second AM device is positioned over the integral foundation using the integral foundation as a location datum and the boss is built on top of the integral foundation using the energy/powder head of the second AM device and a second AM technique to build a completed component. The completed component is removed from the second AM device.

The method of the preceding paragraph can optionally include, additionally and/or alternatively, any one or more of the following features, configurations and/or additional elements:
The method, wherein the plurality of distortion mitigation structures are built as a web on ligaments extending from the foundation.

The method, wherein each of the ligaments of the plurality of distortion mitigation structures includes a chamfer.

The method, wherein each of the ligaments of the plurality of distortion mitigation structures includes a blend radius configured to reduce stress on each of the ligaments.

The method, wherein each of the ligaments of the plurality of distortion mitigation structures is a tetrahedral prism.

The method, wherein the first AM technique is a laser powder bed fusion (PBF-LB) technique and the first AM device is a PBF-LB device.

The method, wherein the second AM technique is a directed energy deposition (DED) technique and the second AM device is a DED device.

The method, wherein the component is a gas turbine engine component.

The method, wherein the gas turbine engine component is a case or a housing.

The method, wherein the gas turbine engine component is made from an aluminum alloy, a titanium alloy, a superalloy, or a specialty steel.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A component (20), comprising:
a component segment (22), a foundation (24a) built on the component segment (22), and a plurality of distortion mitigation structures (26) built on the component segment (22), wherein the component segment (22), foundation (24a), and the plurality of distortion mitigation structures (26) are built with a first additive manufacturing, AM, technique; and
a boss (24) built on the foundation (24a) using a second AM technique;
wherein the plurality of distortion mitigation structures (26) are configured to radiate away from the foundation (24a) and to dissipate heat generated on the foundation (24a) when the boss (24) is built using the second AM technique.

2. The component (20) of claim 1, wherein the first AM technique is a laser powder bed fusion technique.

3. The component (20) of claim 1 or 2, wherein the second AM technique is a directed energy deposition technique.

4. A method (300) of making a component (20), the method (300) comprising:
building, using a first additive manufacturing (AM) technique, a component segment (22), including an integral foundation (24a) for a boss (24) and a plurality of distortion mitigation features (26) on a build platform of a first AM device;
removing the component segment (22) from the first AM device;
moving the component segment (22) to a second AM device;
positioning an energy/powder head of a second AM device over the integral foundation (24a) using the integral foundation (24a) as a location datum;
building, using the energy/powder head of the second AM device and a second AM technique, the boss (24) on top of the integral foundation (24a) to build a completed component (20);
removing the completed component (20) from the second AM device.

5. The component (20) or method (300) of any preceding claim, wherein the plurality of distortion mitigation structures (26) are built as a web on ligaments extending from the foundation (24a).

6. The component (20) or method (300) of claim 5, wherein each of the ligaments of the plurality of distortion mitigation structures (26) includes a chamfer.

7. The component (20) or method (300) of claim 5 or 6, wherein each of the ligaments of the plurality of distortion mitigation structures (26) includes a blend radius (26b) configured to reduce stress on each of the ligaments.

8. The component (20) or method (300) of any of claims 5 to 7, wherein each of the ligaments of the plurality of distortion mitigation structures (26) is a tetrahedral prism.

9. The component (20) or method (300) of any preceding claim, wherein the component (20) is a gas turbine engine component.

10. The component (20) or method (300) of claim 9, wherein the gas turbine engine component is a case or a housing.

11. The component (20) or method (300) of claim 9 or 10, wherein the gas turbine engine component (20) is made from an aluminum alloy, a titanium alloy, a superalloy, or a specialty steel.

12. The method (300) of any of claims 4 to 11, wherein the first AM technique is a laser powder bed fusion, PBF-LB, technique and the first AM device is a PBF-LB device.

13. The method (300) of any of claims 4 to 12, wherein the second AM technique is a directed energy deposition, DED, technique and the second AM device is a DED device.
